Europäisches Patentamt

European Patent Office

Office européen des brevets

(19)

(11) **EP 0 797 333 B1**

(12) **FASCICULE DE BREVET EUROPEEN**

(45) Date de publication et mention
de la délivrance du brevet:
**26.05.2004 Bulletin 2004/22**

(51) Int Cl.[7]: **H04L 27/26**, H04L 27/01

(21) Numéro de dépôt: **97460011.6**

(22) Date de dépôt: **18.03.1997**

(54) **Dispositif et procédé d'égalisation autodidacte d'un signal multiporteuse, et récepteur correspondant**

Verfahren und Einrichtung zur Entzerrung eines Mehrträgersignals und entsprechender Empfänger

Equalisation method and device for a multi-carrier signal and corresponding receiver

(84) Etats contractants désignés:
**DE GB**

(30) Priorité: **18.03.1996 FR 9603557**

(43) Date de publication de la demande:
**24.09.1997 Bulletin 1997/39**

(73) Titulaires:
• **FRANCE TELECOM**
**75015 Paris (FR)**
• **TELEDIFFUSION DE FRANCE**
**75732 Paris Cédex 15 (FR)**

(72) Inventeurs:
• **Duhamel, Philippe**
**92350 Le Plessis-Robinson (FR)**
• **Madec, Philippe**
**35700 Rennes (FR)**
• **de Courville, Marc**
**75014 Paris (FR)**

(74) Mandataire: **Vidon, Patrice**
**Cabinet Vidon**
**16 B, rue Jouanet - B.P. 90333**
**Technopole Atalante**
**35703 Rennes Cedex 7 (FR)**

(56) Documents cités:
**EP-A- 0 441 732**      WO-A-93/26096

• **PROCEEDINGS OF THE INTERNATIONAL CONFERENCE ON COMMUNICATIONS (ICC), GENEVA, MAY 23 - 26, 1993, vol. 1 - 2 - 03, 23 Mai 1993, INSTITUTE OF ELECTRICAL AND ELECTRONICS ENGINEERS, pages 761-765, XP000371187 CHOW J S ET AL: "EQUALIZER TRAINING ALGORITHMS FOR MULTICARRIER MODULATION SYSTEMS"**
• **IEEE TRANSACTIONS ON COMMUNICATIONS, vol. 44, no. 1, 1 Janvier 1996, pages 56-64, XP000549644 AL-DHAHIR N ET AL: "OPTIMUM FINITE-LENGTH EQUALIZATION FOR MULTICARRIER TRANSCEIVERS"**
• **PERSONAL COMMUNICATION - FREEDOM THROUGH WIRELESS TECHNOLOGY, SECAUCUS, NJ., MAY 18 - 20, 1993, no. CONF. 43, 18 Mai 1993, INSTITUTE OF ELECTRICAL AND ELECTRONICS ENGINEERS, pages 649-652, XP000393266 MOHAMED SIALA ET AL: "EQUALIZATION FOR ORTHOGONAL FREQUENCY DIVISION MULTIPLEXING SYSTEM"**

**Description**

Le domaine de l'invention est celui de la réception de signaux multiporteuses.

Plus précisément, l'invention concerne l'égalisation d'un signal multiporteuse reçu au travers d'un canal de transmission variant dans le temps. Notamment, l'invention concerne l'annulation, ou à tout le moins la limitation, de l'interférence entre symboles (IES) générée par le canal de transmission.

L'invention s'applique à tous les types de signaux mettant en oeuvre une pluralité de fréquences porteuses orthogonales, c'est-à-dire les signaux transmis selon la technique de multiplexage par répartition en fréquence (en anglais : Orthogonal Frequency Division Multiplex (OFDM)).

Il peut par exemple s'agir du système COFDM (Coded Orthogonal Frequency Division Multiplex (multiplexage de fréquences orthogonales codées)), mis en oeuvre notamment dans le cadre du projet européen Eurêka 147 "DAB" (Digital Audio Broadcasting (diffusion audionumérique))[4] (les références indiquées dans la présente description sont compilées en annexe), et également pressenti pour la transmission de signaux de télévision (par exemple le système European Digital Terrestrial TV Broadcasting (dTTb)), ou encore pour la transmission de données sur câble (Discrete Multitone Transmission (DMT)).

Dans de tels systèmes de transmission, les données source à transmettre sont organisées tout d'abord en symboles (constitués d'une ou plusieurs données source) modulant chacun, pendant un intervalle de temps déterminé, une fréquence porteuse choisie parmi une pluralité de porteuses. Le signal formé par l'ensemble des porteuses modulées est transmis vers un ou plusieurs récepteurs, qui reçoivent un signal émis perturbé par le canal de transmission.

Les symboles sont regroupés en bloc de symboles (parfois également appelé symbole OFDM), ou ensemble de N symboles modulant les N porteuses pendant ledit intervalle de temps déterminé. La modulation d'un bloc de symboles est assurée par l'application d'une transformation orthogonale sur N valeurs source à transmettre .

Cette opération est généralement assurée par l'application d'une transformée de Fourier Discrète Inverse (TFDI). Cette structure permet d'égaliser le signal reçu avec un coût de calcul très faible, mais nécessite la présence d'un intervalle de garde au début de chaque bloc de d'échantillons de signal (ou symbole OFDM).

Cette opération pourrait également être assurée par tout banc de filtres à reconstruction parfaite. La simplification du procédé d'égalisation obtenu dans le cas de la TFDI n'est alors plus faisable. Un autre procédé doit être envisagé.

L'intervalle de garde (IG) utilisé avec la TFD est un préfixe redondant de taille supérieure à la mémoire du canal, durant lequel aucune information utile n'est transmise. En concaténant à chaque bloc d'échantillons temporels à transmettre un intervalle de garde l'interférence entre symboles (IES) générée par passage dans le canal peut être facilement annulée [5].

Un choix judicieux de l'intervalle de garde consiste en une duplication circulaire d'une partie du bloc, de sorte que la partie utile des données reçues corresponde alors à une convolution cyclique des données émises par le canal.

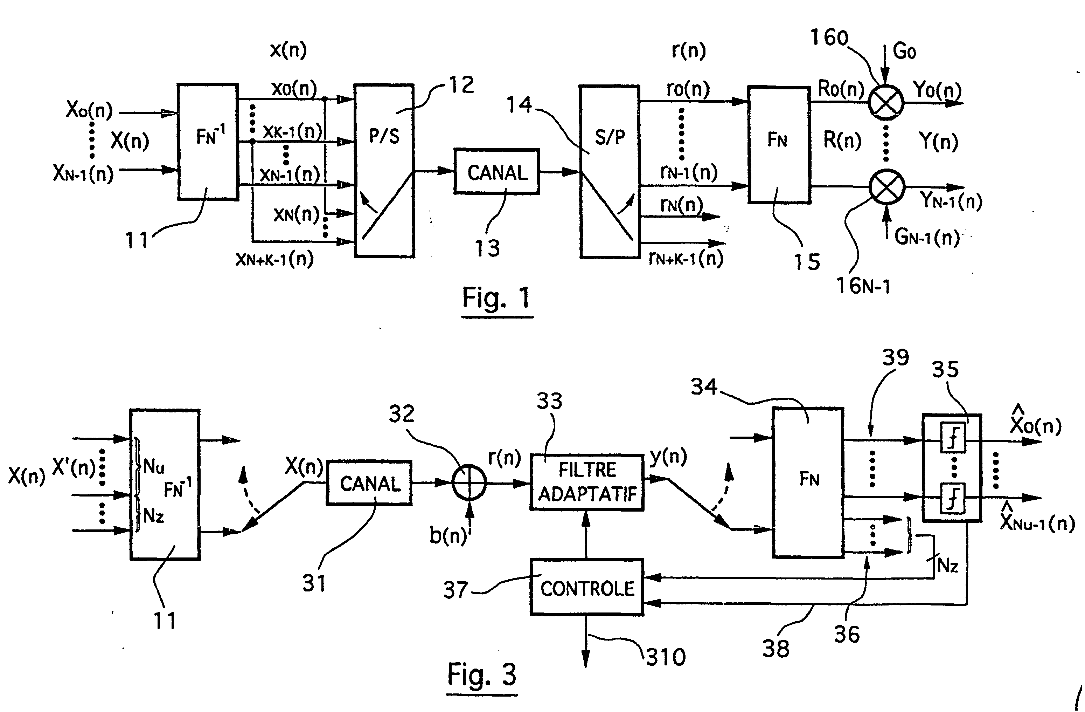

La figure 1 illustre ce principe, N valeurs à transmettre $X_0(n)$ à $X_{N-1}(n)$ alimentent la TFDI 11, qui délivre les valeurs transformées $x_0(n)$ à $x_{N-1}(n)$ correspondantes. Ces valeurs alimentent un convertisseur parallèle-série 12, qui assure un suréchantillonnage, les K premières valeurs $x_0(n)$ à $x_{K-1}(n)$ étant répétées durant la durée correspondant à l'intervalle de garde.

Après transmission au travers du canal de transmission 13, le signal est reçu dans le récepteur. Celui-ci comprend un convertisseur série-parallèle 14, symétrique du convertisseur 12, qui délivre d'une part les échantillons $r_0(n)$ à $r_{N-1}(n)$ correspondant aux valeurs $x_0(n)$ à $x_{N-1}(n)$, et d'autre part les échantillons $r_N(n)$ à $r_{N+K-1}(n)$, correspondant à l'intervalle de garde.

L'interférence entre symboles OFDM est confinée dans l'intervalle de garde (puisqu'il est choisi de durée supérieure à la mémoire du canal, et donc dans les échantillons $r_N(n)$ à $r_{N+K-1}(n)$, qui sont non utilisés. Les autres échantillons ne sont pas perturbés par l'interférence entre symboles OFDM, mais seulement, éventuellement, par l'interférence intra symbole OFDM.

Les échantillons $r_0(n)$ à $r_{N-1}(n)$ sont ensuite démodulés, à l'aide d'une Transformée de Fourier Discrète (TFD) 15, qui délivre des sorties $R_0(n)$ à $R_{N-1}(n)$. L'égalisation s'effectue, après démodulation, par simple division $16_0$ à $16_{N-1}$ de chaque sortie de la TFD 15 par le coefficient correspondant $G_i$ d'une estimation de la réponse fréquentielle du canal.

Cette méthode est très efficace dans le cas de canaux non bruités et à l'avantage de présenter une complexité arithmétique faible.

Toutefois, elle présente plusieurs inconvénients majeurs.

En effet, cette procédure requiert une estimation de la réponse fréquentielle du canal. Elle est obtenue dans les systèmes actuels en insérant périodiquement parmi les éléments de signal utiles des symboles de référence, de valeurs et de positions connues des récepteurs.

Par conséquent, à débit en ligne donné, cette technique diminue le débit disponible pour les données utiles de deux façon. D'une part à cause de l'utilisation d'un intervalle de garde (jusqu'à un quart de la ressource de transmission) et d'autre part du fait de l'utilisation de symboles de référence (jusqu'à un dixième de la ressource de transmission restante).

Afin d'augmenter le débit, une diminution de la durée de l'intervalle de garde a été proposée ([6,7]). Une telle technique introduit donc de l'interférence entre symboles résiduelle provenant de la différence de taille entre la mémoire du canal et la longueur de l'intervalle de garde. Cette interférence est réduite par un filtre adaptatif court (d'un petit nombre de coefficients) placé en amont du démodulateur. Sa fonction est de "confiner" la réponse impulsionnelle du canal de sorte que la réponse de la combinaison canal-égaliseur soit vue par le récepteur comme ayant une taille plus faible.

Cette solution nécessite toujours l'utilisation d'un signal de référence pour déterminer la réponse impulsionnelle du canal. Par ailleurs, elle rend plus complexes les récepteurs.

En outre la méthode décrite ci-dessus en relation avec la figure 1 est très spécifique aux systèmes OFDM utilisant une transformation de Fourier discrète inverse pour réaliser la modulation, ce qui est très limitatif. En effet, d'une manière générale, les systèmes OFDM peuvent être présentés comme des transmultiplexeurs à reconstitution parfaite. Dans ce cas, l'utilisation d'un intervalle de garde ne permet plus une égalisation aisée.

L'invention a notamment pour objectif de pallier ces différents inconvénients de l'état de la technique.

Plus précisément, un objectif de l'invention est de fournir un procédé et un dispositif d'égalisation d'un signal OFDM, ainsi qu'un récepteur correspondant, qui permettent de s'affranchir de la nécessité d'un intervalle de garde (suppression ou réduction de l'intervalle) et/ou de symboles de référence.

En d'autres termes, l'invention a notamment pour objectif de fournir une technique d'égalisation qui permette de mieux exploiter la ressource disponible au profit du signal utile et donc d'augmenter le débit utile, à bande passante égale (ou de réduire la bande passante nécessaire, à débit utile égal).

Un autre objectif de l'invention est de fournir une telle technique, qui reste compatible avec les signaux connus. Ainsi, la technique de l'invention doit pouvoir fonctionner en présence d'intervalles de garde, quelle que soit leur taille (éventuellement variable). Elle doit également pouvoir être mise en oeuvre en présence de symboles de référence, et même, le cas échéant, en tirer avantage.

L'invention a également pour objectif de fournir une telle technique, qui soit simple à mettre en oeuvre de façon industrielle, et permette la réalisation de récepteurs à faible coût. Par ailleurs, un autre objectif est de fournir une telle technique, permettant d'envisager aisément la réalisation de plusieurs niveaux de qualité de récepteur.

Encore une autre objectif de l'invention est de fournir une telle technique qui permette également la synchronisation du récepteur, ou au moins qui offre une aide à la synchronisation.

L'invention a encore pour objectif de fournir une telle technique, qui permette d'augmenter la distance entre émetteurs dans un réseau constitué de plusieurs émetteurs fonctionnant à la même fréquence, et donc de simplifier la mise en oeuvre et l'infrastructure d'un tel réseau.

De même, dans un réseau existant, un objectif de l'invention est de permettre d'étendre la couverture de ce réseau, sans agir sur les émetteurs existants.

Ces objectifs, ainsi que d'autres qui apparaîtront par la suite, sont atteints selon l'invention grâce à un dispositif d'égalisation d'un signal multiporteuse reçu au travers d'un canal de transmission variable, ledit signal étant formé d'une pluralité de fréquences porteuses orthogonales modulées chacune par des symboles source représentatifs d'un signal source à transmettre, ledit dispositif comprenant :

- un filtre adaptatif alimenté par ledit signal reçu et délivrant un signal égalisé, échantillonné à une cadence supérieure à celle desdits symboles,
- des moyens de transformation inverse d'une transformation mise en oeuvre à l'émission, alimentés par ledit signal égalisé et délivrant, lorsque ledit filtre adaptatif a convergé, d'une part un premier jeu de valeurs représentatives des symboles émis, et d'autre part un second jeu de valeurs non significatives par rapport audit signal source, et
- des moyens de contrôle dudit filtre adaptatif, agissant en fonction desdites valeurs formant ledit second jeu de valeurs (par exemple de façon qu'elles soient d'énergie moyenne minimale).

L'invention repose donc sur une approche tout à fait nouvelle. Alors que, selon la technique antérieure, l'égalisation était assurée après la transformation, elle est selon l'invention effectuée avant, sur le signal reçu.

Aucune information particulière transmise par l'émetteur (symboles de référence) n'est nécessaire. La transformation produit automatiquement, du fait du suréchantillonnage par rapport à la cadence des symboles, les valeurs qu'il convient de minimiser. En d'autres termes, le dispositif de l'invention est autodidacte.

Comme on le verra par la suite, cette technique permet, dans certains cas, de s'affranchir complètement ou partiellement de la présence de l'intervalle de garde et/ou des éléments de référence. En conséquence, il est possible d'augmenter le débit utile, et/ou d'obtenir une couverture géographique plus importante des émetteurs.

Selon un mode de réalisation avantageux de l'invention, lesdits moyens de contrôle tiennent compte également de valeurs appartenant audit premier jeu de valeurs et correspondant à des symboles de référence, dont la valeur à l'émission est connue a priori du récepteur.

Ces symboles de référence, par exemple présents pour déterminer une estimation de la réponse fréquentielle du canal, permettent d'optimiser les calculs des moyens de contrôle.

Selon un premier mode de réalisation de l'invention, lesdits moyens de transformation inverse présentent un nombre d'entrées $N_r$ identique au nombre d'entrées desdits moyens de transformation mis en oeuvre à l'émission, ceux-ci étant systématiquement alimentés par un jeu de $N_r-N_u$ valeurs nulles.

En d'autres termes, dans ce cas, le signal à émettre comporte, avant transformation par le modulateur numérique, plusieurs ($N_r-N_u$) valeurs systématiquement nulles. On doit alors les retrouver à la réception. C'est le rôle des moyens de contrôle de configurer le filtre adaptatif à cette fin.

Il est à noter que l'emplacement des symboles nuls dans le bloc de symboles est indifférent, et que ceux-ci peuvent être groupés ou répartis. Par ailleurs, et selon un aspect particulièrement intéressant de l'invention, il est tout à fait possible de se passer de la présence de symboles nuls à l'émission.

En effet, selon un second mode de réalisation de l'invention, lesdits moyens de transformation inverse présentent un nombre d'entrées $N_r$ supérieur au nombre d'entrées desdits moyens de transformation mis en oeuvre à l'émission.

Cette seconde situation correspond à un suréchantillonnage au récepteur $N_u/N$ par rapport à l'échantillonnage réalisé à l'émetteur. On notera que ce second mode de réalisation n'est pas incompatible avec la présence de symboles nuls à l'émission. Toutefois, ceux-ci ne sont nullement indispensables, hormis pour faciliter la conversion numérique/ analogique. Cela permet bien sûr un gain en débit utile.

On comprend aisément que la technique est d'autant plus efficace que le nombre de coefficients à minimiser est grand. Il est ainsi possible de définir plusieurs niveaux de qualité de récepteur, en fonction du nombre d'entrées des moyens de transformation.

Alors que les techniques antérieures à intervalle de garde ne peuvent être mises en oeuvre qu'avec une transformée de Fourier, lesdits moyens de transformation selon l'invention peuvent appartenir au groupe comprenant :

- les transformations orthogonales discrètes réelles ou complexes, telles que les transformations de Fourier discrètes ;
- les bancs de filtres réels ou complexes.

Préférentiellement, lesdits moyens de contrôle minimisent un critère quadratique fonction dudit second jeu de valeurs.

De façon avantageuse, lesdits moyens de contrôle comprennent des moyens pour interrompre momentanément la mise à jour des paramètres dudit filtre adaptatif, ou pour les forcer à des valeurs prédéterminées, ou pour ralentir leur vitesse de mise à jour, lorsque des conditions de réception défavorables sont détectées.

Par ailleurs, le dispositif selon l'invention peut avantageusement délivrer une information de synchronisation ou d'aide à la synchronisation, ou même s'inclure au dispositif de synchronisation, voire le remplacer, dans certaines phases de fonctionnement.

L'invention concerne également les récepteurs incorporant des dispositifs décrits ci-dessus, ainsi que le procédé d'égalisation correspondant.

Un tel procédé comprend notamment les étapes suivantes :

- filtrage adaptatif dudit signal reçu, délivrant un signal égalisé échantillonné à une cadence supérieure à celle desdits symboles,
- transformation, inverse d'une transformation effectuée à l'émission, dudit signal égalisé, délivrant, lorsque ledit filtre adaptatif a convergé, d'une part un premier jeu de valeurs représentatives des symboles émis, et d'autre part un second jeu de valeurs non significatives par rapport audit signal source, et
- contrôle des paramètres dudit filtre adaptatif, agissant en fonction desdites valeurs formant ledit second jeu de valeurs.

D'autres caractéristiques et avantages de l'invention apparaîtront à la lecture de la description suivante d'un mode de réalisation préférentiel de l'invention, donné à titre de simple exemple illustratif et non limitatif, et des dessins annexés, parmi lesquels :

- la figure 1 illustre de façon simplifiée le principe connu de l'égalisation avec un intervalle de garde dans un système OFDM, déjà discuté en préambule;
- la figure 2 est un schéma présentant la modélisation discrète suréchantillonnée d'un modulateur OFDM ;
- la figure 3 présente un schéma synoptique d'un dispositif d'égalisation selon l'invention ;
- la figure 4 illustre le modèle continu d'un modulateur OFDM, discuté dans l'annexe jointe à la description ;
- la figure 5 présente de façon simplifiée le procédé d'égalisation de l'invention.

L'invention concerne donc l'égalisation de signaux OFDM.

Pour comprendre l'invention, on peut observer que la réalisation d'un modulateur à l'aide d'un dispositif "tout numérique" il est généralement nécessaire de travailler sur une version suréchantillonnée du signal qui serait effectivement émis par un modulateur analogique correspondant, cela pour permettre l'utilisation d'algorithmes rapides, et peut aider à la conversion numérique/analogique.

Les systèmes OFDM possèdent une spécificité : puisque les signaux (temporels et continus) émis sont à spectres bornés, leur modélisation discrète à une cadence plus élevée que celle des symboles émis met en évidence l'utilisation d'un modulateur de taille plus grande que celle employée dans un modulateur numérique classique, les entrées supplémentaires étant mises à zéro.

La justification de cette modélisation discrète est donnée, sur le plan mathématique, en annexe.

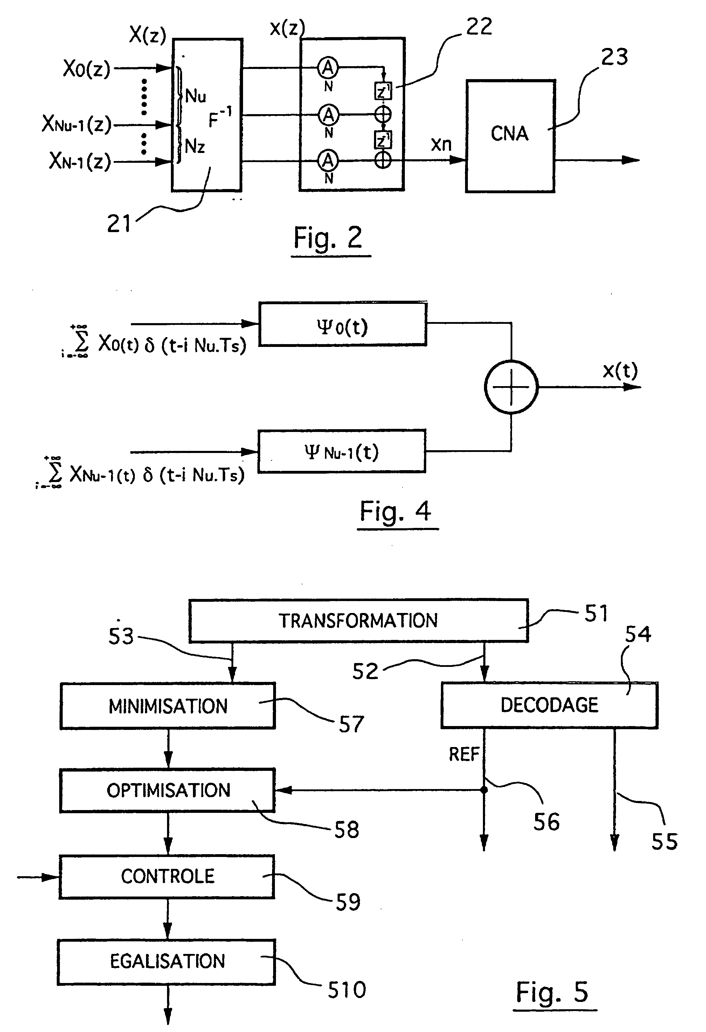

Le principe en est illustré en figure 2. Il est équivalent à, d'abord, ajouter $N_z$ symboles nuls $X_{Nu}(z)$ à $X_{Nu+Nz}(z)$ aux $N_u$ symboles utiles $X_0(z)$ à $X_{Nu-1}(z)$ constituant les entrées utiles, ce qui produit le signal échantillonné $X(z)$, et ensuite à produire les valeurs transformées x(z), à partir de X(z).

Les $N_z$ symboles nuls créent un suréchantillonnage.

Un convertisseur parallèle série 22 délivre ensuite les échantillons $x_n$ correspondants, en vue de leur conversion numérique/analogique puis de leur émission.

Le signal en sortie de la transformée 22 du modulateur étant suréchantillonné d'un facteur $N/N_u$ par rapport au signal qui serait obtenu avec une transformée de taille $N_u$, et les signaux correspondant aux symboles non nuls étant très localisés en fréquence, on peut alors tolérer une interpolation imparfaite dans le convertisseur numérique/ analogique (CNA) 23 de l'émetteur (et un échantillonnage et une quantification imparfaits au récepteur).

En supposant une structure de récepteur similaire et un canal transparent, les symboles nuls ainsi ajoutés se retrouvent aux mêmes places après démodulation.

Ce n'est cependant plus le cas dès que le canal n'est plus trivial, ce qui est généralement le cas. Cette propriété est alors perdue, à cause de l'interférence introduite par le canal entre plusieurs symboles OFDM.

L'invention propose une technique permettant de retrouver cette propriété.

Les inventeurs ont en effet vérifié qu'il est possible, dans le récepteur, de régler un égaliseur de façon que ces symboles nuls soient de nouveau présents, et que cela est suffisant pour égaliser le canal.

Ceci suppose simplement que la perturbation apportée par le canal sur ces symboles nuls ne soit pas totalement rejetée par le filtre analogique du récepteur destiné à supprimer les parasites provenant des bandes ajacentes.

La figure 3 illustre le principe de l'invention.

Les symboles OFDM x(n) sont produits comme déjà expliqué en relation avec la figure 1.

Aucune adaptation n'est nécessaire dans le modulateur (mais des simplifications sont possibles).

Ces symboles x(n) sont émis au travers du canal C 31, qui perturbe le signal, notamment en y créant de l'interférence entre symboles. Il s'y ajoute un bruit b(n)32. Le signal reçu r(n) vaut donc C(n).x(n) + b (n).

Selon l'invention, ce signal r(n) alimente directement un filtre adaptatif 33, jouant le rôle d'égaliseur adaptatif. Il est adapté par la minimisation d'un critère quadratique ou autre faisant intervenir les signaux des sous-bandes l'on doit retrouver, après démodulation, des valeurs nulles, ou plus précisément ne comportant que des résidus du bruit additif b(n). D'autres critères de minimisation peuvent bien sûr être envisagés, le critère précédent ayant l'avantage de ne nécessiter aucune donnée de référence.

Les symboles égalisés y(n) alimentent les N entrées d'une transformée de Fourier 34. Il est à noter que l'invention n'est pas limitée aux systèmes mettant en oeuvre une transformation de Fourier. Elle peut s'appliquer à la plupart des techniques permettant de décomposer un signal en sous-bandes (transformations orthogonales réelles ou complexes, bancs de filtres réels ou complexes).

On obtient en sortie N échantillons, dont $N_u$ échantillons (39) correspondent aux symboles émis. Ces derniers sont décodés, par exemple par seuillage 35, pour fournir les symboles estimés $X'_0(n)$ à $X'_{Nu-1}(n)$, qui permettent ensuite de reconstituer le signal source.

Les $N_z$ autres échantillons (36), au lieu d'être classiquement ignorés, alimentent des moyens 37 de contrôle du filtre 33, qui agissent sur ce filtre de façon à minimiser le critère sus-mentionné.

Un exemple particulier basé sur la minimisation d'un critère quadratique est détaillé en annexe. Cette annexe fait bien sûr intégralement partie de la présente description.

Dans le cas où certains des symboles utiles sont des symboles de référence 38 connus du récepteur, ils peuvent avantageusement être pris en compte dans le critère d'adaptation par les moyens 37 de contrôle.

L'optimisation de ce critère consiste par exemple en une pondération appropriée de l'erreur dans chaque sous-bande. La pondération optimale dépend notamment de la réponse fréquentielle du filtre réjecteur en entrée du récepteur.

Par ailleurs, les moyens 37 de contrôle peuvent fournir une information permettant la synchronisation, ou l'aide à la synchronisation, du récepteur. Cette information consiste en la valeur du retard introduit par le canal et peut être utilisée pour piloter le dispositif de synchronisation bloc. En effet, l'égaliseur voit les décalages de synchronisation comme des retards associés à la réponse impulsionnelle du canal et compense donc ces retards en égalisant le canal.

Bien que l'on ait présenté jusqu'ici l'invention avec une transformée 34 présentant le même nombre d'entrées, et donc de sorties, que la transformée mise en oeuvre à l'émission, il convient de noter que cela n'est nullement obligatoire. Les tailles de ces transformées sont au contraire complètement indépendantes.

Il est ainsi possible d'augmenter la qualité de l'égalisation en augmentant le nombre Nz de symboles nuls (ou plus précisément à annuler) pris en compte par les moyens 37 de contrôle, c'est-à-dire en augmentant la cadence d'échantillonnage.

En conséquence, il est ainsi envisageable de définir plusieurs niveaux de qualité de récepteur.

Par ailleurs, il est important de noter qu'il n'est nullement nécessaire que des symboles nuls soient émis. Ces symboles émis ont simplement été décrits en détail pour faciliter la compréhension de l'invention. Toutefois, il est clair qu'il suffit qu'un suréchantillonnage soit mis en oeuvre au récepteur pour produire les coefficients 36 nécessaires pour alimenter les moyens 37 de contrôle.

Aucune connaissance sur les données utiles transmises n'est donc nécessaire (sauf lorsque l'option de prise en compte de symboles de référence est utilisée), et le système permet une égalisation autodidacte, ou aveugle.

La figure 5 présente de façon simplifiée le procédé de l'invention, tel qu'il peut être mis en oeuvre dans un récepteur. Les étapes mentionnées sont bien sûr séparées uniquement pour faciliter la compréhension. Dans la pratique, elles sont réalisées en parallèle.

La transformation 51 délivre d'une part des symboles utiles 52, correspondant aux symboles émis, et d'autre part des symboles 53 qui doivent en principe être nuls.

Les symboles utiles 52 sont décodés (54) pour fournir des symboles estimés 55 correspondant au signal source et, le cas échéant, des symboles de référence 56, destinés par exemple à l'estimation de la réponse du canal.

Les symboles 53 sont pris en compte dans une étape de minimisation 57, mettant par exemple en oeuvre le critère de minimisation décrit en annexe.

S'ils sont disponibles, les éléments de référence 56 peuvent être utilisés pour optimiser (58) la minimisation du critère quadratique.

Enfin, une étape de contrôle 59 peut être mise en oeuvre, pour détecter les situations défavorables, qui se produisent par exemple en présence de brouilleurs sporadiques de forte intensité ou lorsqu'un changement brutal intervient (au démarrage en particulier), qui perturbent la convergence du processus adaptatif. Une telle situation peut être détectée en observant les variations du signal égalisé après démodulation. Dans ce cas, on interrompt la mise à jour des paramètres de filtrage, on fixe ceux-ci à des valeurs prédéterminées, ou on ralentit simplement leur vitess de convergence.

Sinon, les paramètres de filtrage répondant au critère de minimisation alimentent le filtre, pour assurer l'égalisation 510.

En résumé, l'invention propose d'introduire en réception une structure (égaliseur) dépendant d'un certain nombre de paramètres. Lorsque ceux-ci sont réglés de manière à minimiser l'énergie des signaux reçus devant être nuls, il est possible d'égaliser complètement le système OFDM et de retrouver les données utiles. Plus généralement on peut utiliser toute référence implicite pour adapter l'égaliseur, notamment si des symboles de référence sont déjà présents pour des raisons diverses. Le critère fait alors intervenir la norme des signaux d'erreur dans les sous-bandes correspondantes avec éventuellement une pondération spécifique. Par exemple, le critère peut être quadratique, auquel cas il fait intervenir l'énergie de ces signaux.

Outre les avantages cités ci-dessus, il est à noter que l'invention permet :

- la réduction de la taille de l'intervalle de garde dans un réseau COFDM (avec un ou plusieurs émetteurs);
- l'augmentation de la distance entre émetteurs dans un réseau COFDM composé de plusieurs émetteurs ;
- l'augmentation de la zone de couverture d'un réseau COFDM existant ;
- l'amélioration des fonctions de synchronisation dans un système OFDM (et suppression éventuelle de porteuses de référence employées à cet effet).

**ANNEXE**

**1 Modélisation discrète du modulateur**

Dans tout ce qui suit, par souci de clarté de l'explication, seul est détaillé le cas d'un système OFDM dont la modulation numérique est effectuée par l'inverse de la transformée de Fourier. En revanche le principe exposé s'applique littéralement à tout autre type de modulation.

Nous allons partir de la définition en temps continu du système OFDM afin d'en détailler une modélisation discrète en bande de base.

**Modèle continu du modulateur:** Soit $l(n)$ la séquence de symboles à émettre, définie avec une période d'échantillonnage $T_s$. Ce flot initial de données est réparti en (disons $N_u$) flots parallèles. On constitue donc $N_u$ sous-séquences X $(n) = (X_0(n),\cdots,X_{N_u-1}(n))^t$, chacune étant émise pendant une période plus grande $N_u T_s$. L'ensemble des symboles émis pendant la durée $N_u T_s$ réunis dans le vecteur X$(n)$ est appelé un symbole OFDM (à différencier d'un symbole de la contellation d'origine).

Le système OFDM actuel répartit ces différentes séquences sur différentes fréquences porteuses dont la réunion forme un ensemble *orthogonal*. Après modulation et mise en forme par les filtres orthogonaux $\psi_k(t)$, la somme $x(t)$ des signaux continus ainsi obtenus est envoyée sur le canal.

Le signal émis $x(t)$ peut donc s'exprimer comme (cf. figure 4 en notant * l'opération de convolution):

$$x(t) \;=\; \sum_{m=0}^{N_u-1} \sum_{i\in\mathbf{Z}} X_m(i)\delta(t - iN_u T_s) * \psi_m(t)$$

$$x(t) \;=\; \sum_{m=0}^{N_u-1} \sum_{i\in\mathbf{Z}} X_m(i)\psi_m(t - iN_u T_s) \qquad\qquad (1)$$

**Passage à une modélisation dicrète**: Jusqu'ici nous ne nous sommes intéressés qu'à une modélisation continue du modulateur. La réalisation d'un tel système requiert l'utilisation de $N_u$ filtres analogiques en parallèle parfaitement orthogonaux, ce qui est difficile à implémenter et donc très coûteux. C'est pourquoi cette opération est plutôt réalisée de manière numérique, les échantillons obtenus étant soumis à un Convertisseur Numérique Analogique (CNA). Détaillons donc dans la suite une modélisation discrète du modulateur.

Il est important de remarquer que dans cette partie, aucun intervalle de garde n'est ajouté avant émission sur le canal, qui est supposé pour l'instant idéal.

Le signal continu $x(t)$ émis pendant $N_u T_s$ sur le canal est construit à partir des $N_u$ séquences $(X_k(n))_{n\in Z}$. Par conséquent, la modulation étant une opération linéaire causale, au moins $N \geq N_u$ échantillons de $x(t)$ doivent être observés pendant la même période afin d'être capable de retrouver les $X_k(n)$ du bloc correspondant. Dans le cas contraire, il y aurait une perte irrémédiable d'information. Prenons donc une période d'échantillonnage $T_e$ de telle sorte que le système conserve une structure bloc de même étendue temporelle. $T_e$ ainsi choisie vérifie l'égalité:

$$NT_e = N_u T_s, \; T_e \leq T_s, \; N \in \mathbb{N} \qquad\qquad (2)$$

avec $N$ entier. $x(t)$ est alors échantillonné avec une période $T_e$ plus petite ou égale à la cadence symbole. L'opération de modulation revient donc à envoyer sur la ligne la version échantillonnée-bloquée $x(nT_e)$ du signal $x(t)$ au rythme $T_e$ mise en forme par un convertisseur numérique analogique.

Nous allons montrer que la version échantillonnée de $x(t)$ se déduit aisément des $X_k(n)$ par une opération de transmultiplexage. En effet, seul intervient dans le calcul de $x(nT_e)$ des combinaisons linéaires des entrées $X_k(n)$ pondérées par les versions échantillonnées des filtres $\psi_k(t)$. L'échantillonnage de $x(t)$ s'écrit:

$$x((nN + k)T_e) = \sum_{m=0}^{N_u-1} \sum_{i\in\mathbf{Z}} X_m(i)\psi(kT_e + (n - i)N_u T_s) \qquad\qquad (3)$$

En outre, puisque les $\psi_k(t)$ sont des filtres orthogonaux, il devrait être possible d'opérer un échantillonnage critique $(T_e = T_s)$ sans perte d'information. Cependant le CNA correspondant aurait alors une réponse impulsionnelle infinie (i.e. $sin(t)/t$), ce qui n'est pas réalisable. Par conséquent, afin de minimiser l'influence d'un CNA non idéal, on choisit habituellement $T_e < T_s$ soit $N_u \leq N$.

Notons par x$(n) = (x_0(n),\cdots,x_{N-1}(n))^t$ le vecteur des échantillons du signal modulé qui sont transmis durant le bloc $n$ ($x_0(n)$ étant le dernier à être envoyé):

$$x_k(n) = x((nN - k)T_e) = x(nN_u T_s - kT_e) \; 0 \leq k \leq N - 1 \qquad\qquad (4)$$

Par construction, les différentes séquences $x_k(n)$ forment les composantes polyphases de type II des échantillons temporels à émettre. On a donc en se référant au modulateur analogique (1):

$$x_k(n) = \sum_{m=0}^{N_u-1} \sum_{i \in \mathbf{Z}} X_m(i)\psi_m\left((n-i)N_u T_s - kT_e\right) \qquad (5)$$

Supposons pour simplifier que la modulation du système OFDM soit réalisée par un décalage en fréquence classique du spectre du filtre $u(t)$:

$$\psi_k(t) = u(t)e^{-2j\pi f_k t} \qquad (6)$$

où $u(t)$ est réduit à la fenêtre temporelle rectangulaire de durée symbole (OFDM):

$$u(t) = \begin{cases} 1/\sqrt{N_u T_s} & 0 \le t \le N_u T_s; \\ 0 & \text{sinon.} \end{cases}$$

Si on travaille en bande de base $f_0 = 0$ et qu'on suppose les porteuses équiréparties:

$$\{f_m = f_0 + \frac{m}{N_u T_s} m \in [0, N_u - 1]\}$$

on obtient:

$$x_k(n) = \sum_{i \in \mathbf{Z}} u((n-i)N_u T_s - kT_e) \sum_{m=0}^{N_u-1} X_m(i)e^{2j\pi f_m((n-i)N_u T_s - kT_e)}$$

soit,

$$x_k(n) = \sum_{i \in \mathbf{Z}} u((n-i)N_u T_s - kT_e) \sum_{m=0}^{N_u-1} X_m(n-1)e^{2j\pi km/N} \qquad (7)$$

Pour $0 \le k \le N - 1$, $u((n - i)N_u T_s - kT_e) = \delta_{n-1,i}$ par conséquent (7) se réduit à:

$$x_k(n) = \frac{1}{\sqrt{NT_e}} \sum_{m=0}^{N_u-1} X_m(n-1)e^{2j\pi km/N} \qquad (8)$$

Dans l'équation précédente, seule perdure la Transformée de Fourier Discrète Inverse (TFDI) de la séquence $(X_m(n - 1))_m$ complétée par $N_z$ zéros.

$$X(n) = (X_0(n), \cdots, X_{N-N_z-1}(n), 0, \cdots, 0)^t$$

$$x(n) = \frac{1}{\sqrt{T_e}}F^{-1}X(n-1) \qquad (9)$$

Il apparaît donc que les $x_n$ sont obtenus en cascadant une TFDI de dimension $N$ modulant la séquence $X_m(i)$ complétée par $N_z = N - N_u$ zéros et un multiplexeur temporel.

Philosophiquement, rajouter des zéros à l'entrée de la TFD ne modifie pas le spectre du signal de sortie dans le cas d'une CNA parfaite (ici nous entendons par CNA parfait un interpolateur parfait). En effet, échantillonner un même signal OFDM analogique $x(t)$ à des cadences supérieures à celle déterminées par le temps symbole ne conduit qu'à ajouter des zéros à l'entrée de la TFDI dans le modèle discret du modulateur. Or toutes ces versions de signaux correspondent au même signal analogique et possèdent donc le même spectre (formule d'interpolation de signaux à bande limitée). Il est légitime de se demander ce qui peut motiver le choix d'une fréquence d'échantillonnage plus élevée puisqu'un suréchantillonnage augmente la complexité de l'émetteur. Cela se comprend dans le cas d'un CNA imparfait. En effet, cela peut alors s'avérer très utile car, multiplier le nombre d'échantillons temporels facilite l'interpolation.

Dans toute la suite de ce document nous supposerons que la période d'échantillonnage $T_e$ est inférieure au temps symbole. Ainsi la modulation est réalisée par une TFDI de dimension $N = N_u + N_z$ et les $N_z$ dernières entrées portent des signaux nuls.

**Modélisation discrète du démodulateur**: Dans le cas d'un canal idéal, montrons comment l'information peut être retrouvée au récepteur. Si le signal $x(t)$ est échantillonné à la même cadence $T_e$ qu'à l'émission, l'équation (9) est encore valide. X peut donc être retrouvé sans erreur comme la sortie du démodulateur de matrice $F$ (la TFD).

## 2 Égalisation autodidacte des systèmes OFDM basée sur la minimisation d'un critère quadratique

**Critère**: Nous avons mis en évidence qu'en travaillant à un rythme plus grand que l'inverse du temps symbole $(T_s)$, la modélisation discrète du système OFDM fait apparaître la transmission de zéros. En présence d'un canal non idéal, ces zéros ne sont pas conservés à la sortie $(Y_i(n))$ du démodulateur. Il est possible d'égaliser le canal en imposant que certaines sorties du démodulateur soient nulles. Les symboles de référence ne sont plus nécessaires et le débit en est augmenté. L'égalisation nécessite de choisir un critère à minimiser. Le critère quadratique le plus simple qui soit compatible avec les considérations précédentes est le suivant:

$$J_z = \sum_{i=N_u}^{N-1} \mathcal{E}\left(|Y_i(n)|^2\right) \qquad (10)$$

On peut remarquer qu'une solution évidente mais indésirable à la minimisation de $J_z$ liée au choix de notre structure est $W(z) = 0$. En effet, cette solution permettrait d'obtenir $J_z = 0$. Une contrainte doit donc être imposée sur l'égaliseur afin d'éviter cette solution triviale.

**Structure:** Dans cette partie seul le cas d'un égaliseur linéaire $W(z)$ de coefficients $W = (w_0, \cdots, w_{N-1})^t$ placé en amont du démodulateur après le canal $C = (c_0, \cdots, c_{P-1}, 0, \cdots, 0)^t$ est traité. En revanche la méthode proposée devrait pouvoir être généralisée à d'autres structures plus complexes tels que les égaliseurs à retour de décision (DFE) [8]. Les notations employées dans la suite sont définies figure 3.

Puisque le critère ne prend en compte que les "porteuses" émettant des signaux nuls, il est pratique de diviser la matrice TFD assurant la démodulation en deux parties $(F_{T_c}$ and $F_T)$ selon le nombre $N_z$ de symboles nuls introduits dans le système.

$$F = (\mathbf{F}(0), \cdots, \mathbf{F}(N-1))^t = \begin{pmatrix} F_{T_c} \\ F_T \end{pmatrix}_{N \times N} \begin{matrix} \updownarrow N_u = N - N_z \\ \updownarrow N_z \end{matrix}$$

On adoptera aussi les notations suivantes:

$$x_n = (x_n, \cdots, x_{n-N+1})^t$$

$$x(n) = (x_0(n), \cdots, x_{N-1}(n))^t = x_{nN} = F^{-1}X(n)$$

$$\chi_n = (x_n, \cdots, x_{n-N+1})^t$$

$$\chi_n^2 = (\chi_n \chi_{n-N+1})_{N \times 2N}$$

$$r(n) = r_{nN}$$

$$\mathcal{R}_n = (\mathbf{r}_n, \cdots, \mathbf{r}_{n-N+1})^t$$

$$b_n = (b_n, \cdots, b_{n-N+1})^t$$

$$\mathcal{B}_n = (\mathbf{b}_n, \cdots, \mathbf{b}_{n-N+1})^t$$

où $b_n$ est un échantillon de bruit blanc gaussien.

Il est important de distinguer les nuances subtiles introduites dans ces notations:

- $a_n$ désigne un échantillon;
- $a_n$ est un vecteur d'échantillons et $a_{n+1}$ se déduit de $a_n$ par insertion du nouvel élément $\alpha_{n+1}$ en sa tête;
- a($n$) est le vecteur "bloc" d'échantillons de sorte que a($n$ + 1) et a($n$) n'ont aucun échantillon en commun.

Le signal reçu $\gamma_n$ vérifie:

$$r_n = \chi_n C + b_n$$

Le vecteur des sorties $y_n$ de l'égaliseur W s'écrit alors:

$$\mathbf{y}_n = \mathcal{X}_n^2 \mathcal{C} \mathbf{W} + \mathcal{B}_n \mathbf{W}$$

$$y(n) = (y_0(n), \cdots, y_{N-1}(n))^t = y_{nN}$$

Après démodulation on a ainsi:

$$\mathbf{Y}(n) = \begin{pmatrix} \mathbf{Y}_{T_c}(n) \\ \mathbf{Y}_T(n) \end{pmatrix} \begin{matrix} \updownarrow N_u \\ \updownarrow N_z \end{matrix} = F\mathbf{y}(n)$$

Le critère peut donc s'exprimer sous la forme:

$$J_z \;\simeq\; \mathcal{E}(\mathbf{Y}_T^H(n)\mathbf{Y}_T(n)) = \sum_{i=N_u}^{N-1} \mathcal{E}\left(|Y_i(n)|^2\right) \tag{11}$$

$$\tag{12}$$

Algorithmique adaptative: Présentons ici une implantation adaptative de la minimisation de $J_z$. Puisque le système OFDM fonctionne par bloc, l'algorithme adaptatif de mise à jour de l'égaliseur linéaire proposé est un algorithme fonctionnant lui aussi par bloc.

Exemple: l'algorithme "Block Least Mean Square" (BLMS) [9, 10], que nous détaillons ci-après.

Si on désigne par $J_z(n)$ l'estimé instantané de $J_z$:

$$\hat{J}_z(n) = Y_T^H(n) Y_T(n)$$

une adaptation de type LMS de W conduit à:

$$W(n+1) = W(n) - \mu\, \frac{\partial \hat{J}_z(n)}{\partial W^*}$$

où $\mu$ est le pas d'adaptation (positif) qui contrôle la convergence du processus adaptatif. Comme $Y_T = F_T R_{nN} W$ on a:

$$\frac{\partial \hat{J}_z(n)}{\partial W^*} = R_{nN}^H\, F_T^H Y_T(n)$$

Ce qui permet d'établir l'équation adaptative de l'algorithme proposé:

$$W(n+1) = W(n) - \mu R_{nN}^H F_T^H Y_T(n) \tag{13}$$

Comme pour tout algorithme adaptatif autodidacte basé sur un critère quadratique, une correction sur le gain et sur la phase doit être mise en oeuvre à chaque itération en imposant une contrainte sur le filtre adaptatif. Le gain est facilement obtenu en imposant aux sorties du démodulateur d'avoir une énergie moyenne égale à celle de la constellation des symboles émis (cf. figure 3). Si un codage différentiel est utilisé à l'émetteur, la phase est réglée de manière classique de façon à ce que la constellation reçue ait la même forme après réception. Sinon, des symboles de référence peuvent être insérés dans une (ou plusieurs) sous-bande pour permettre de résoudre à la fois le problème de l'indétermination du gain et de la phase comme celui de la contrainte pour empécher la convergence de l'égaliseur vers la solution nulle.

Il est possible d'améliorer le vitesse de convergence du processus adaptatif en utilisant d'autres types d'algorithmes adaptatifs: par exemple le "Weighted Subband Adaptive Filter" (WSAF) [11] semble particulièrement bien adapté à l'égalisation des sytèmes OFDM.

**Références**

[1] B.R. Saltzberg. Performance of an efficient parallel data transmission system. *IEEE Tr. on Comm.*, 15(6): 805-811, December 1967.

[2] S.B. Weinstein and P.M. Ebert. Data transmisison by frequency-division multiplexing using the discrete fourier transform. *IEEE Tr. on Comm.*, 19(5):628-634, October 1971.

[3] B. Hirosaki. An orthogonally-multiplexed qam system using the discrete Fourier transform. *IEEE Tr. on Comm.*, 29(7):982-989, July 1981.

[4] M Allard and R. Lassale. Principles of modulation and channel coding for digital broadcasting for mobile receivers. *European Broadcasting Union Review Technical,* 224:168-190, August 1987.

[5] A. Peled and A. Ruiz. Frequency domain data tranmission using reduced computational complexity algorithms. In *Proceedings of the Int. Conf. on ASSP,* pages 964-967, Denver, USA, April 1980.

[6] Jerry C. Tu Jacky S. Chow and John M. Cioffi. A discrete multitone transceiver system for HDSL applications. *IEEE Trans. on ASSP,* 9(6):895-908, August 1991.

[7] John M. Cioffi Jacky S. Chow and John A.C. Bingham. Equalizer training algorithms for multicarrier modulation systems. In *Proceedings of the Int. Conf. on Communications,* pages II.761-II.765, Geneva, Switzerland, May 1993.

[8] J.G. Proakis. *Digital Communications.* Mc Graw Hill, 2nd ed., 1989.

[9] John McCool Mauro Dentino and Bernard Widrow. Adaptive filtering in the frequency domain. *Proceedings of the IEEE*, 66(12):1658-1659, December 1978.

[10] Earl R. Ferrara. Fast implementation of LMS adaptive filters. *IEEE Trans. on ASSP,* 28(4):474-475, August 1980.

[11] M. de Courville and P. Duhamel. Adaptive filtering in subbands using a weighted criterion. In *Proceedings of the Int. Conf. on ASSP*, pages II.985-II.988, Detroit, USA, May 1995.

## Revendications

1. Dispositif d'égalisation d'un signal multiporteuse reçu au travers d'un canal de transmission variable, ledit signal étant formé d'une pluralité de fréquences porteuses orthogonales modulées chacune par des symboles source représentatifs d'un signal source à transmettre, **caractérisé en ce qu'**il comprend :

   - un filtre adaptatif (33) alimenté par ledit signal reçu et délivrant un signal égalisé, échantillonné à une cadence supérieure à celle desdits symboles,
   - des moyens (34) de transformation inverse d'une transformation (11) mise en oeuvre à l'émission, alimentés par ledit signal égalisé et délivrant, lorsque ledit filtre adaptatif (33) a convergé, d'une part un premier jeu (39) de valeurs représentatives des symboles émis, et d'autre part un second jeu (36) de valeurs non significatives par rapport audit signal source, et
   - des moyens (37) de contrôle dudit filtre adaptatif, agissant en fonction desdites valeurs formant ledit second jeu de valeurs .

2. Dispositif d'égalisation selon la revendication 1, **caractérisé en ce que** lesdits moyens (37) de contrôle tiennent compte de valeurs appartenant audit premier jeu de valeurs et correspondant à des symboles de référence (38), dont la valeur à l'émission est connue a priori du récepteur.

3. Dispositif d'égalisation selon l'une quelconque des revendications 1 et 2, **caractérisé en ce que** lesdits moyens (34) de transformation inverse présentent un nombre d'entrées $N_r$ identique au nombre d'entrées desdits moyens (11) de transformation mis en oeuvre à l'émission, ceux-ci étant systématiquement alimentés par un jeu de $N_r$-$N_u$ valeurs nulles.

4. Dispositif d'égalisation selon l'une quelconque des revendications 1 et 2, **caractérisé en ce que** lesdits moyens (34) de transformation inverse présentent un nombre d'entrées $N_r$ supérieur au nombre d'entrées desdits moyens (11) de transformation mis en oeuvre à l'émission.

5. Dispositif d'égalisation selon l'une quelconque des revendications 1 à 4, **caractérisé en ce que** lesdits moyens (34) de transformation appartiennent au groupe comprenant :

   - les transformations orthogonales discrètes réelles ou complexes, telles que les transformations de Fourier discrètes ;
   - les bancs de filtres réels ou complexes.

**6.** Dispositif d'égalisation selon l'une quelconque des revendications 1 à 5, **caractérisé en ce que** lesdits moyens (37) de contrôle sont adaptés pour minimiser un critère quadratique fonction dudit second jeu de valeurs.

**7.** Dispositif d'égalisation selon l'une quelconque des revendications 1 à 6, **caractérisé en ce que** lesdits moyens (37) de contrôle comprennent des moyens pour interrompre momentanément la mise à jour des paramètres dudit filtre adaptatif, ou pour les forcer à des valeurs prédéterminées, ou pour ralentir leur vitesse de convergence, lorsque des conditions de réception défavorables sont détectées.

**8.** Dispositif d'égalisation selon l'une quelconque des revendications 1 à 6, **caractérisé en ce qu'**il délivre une information de synchronisation ou d'aide à la synchronisation.

**9.** Récepteur d'un signal multiporteuse reçu au travers d'un canal de transmission variable, ledit signal étant formé d'une pluralité de fréquences porteuses orthogonales modulées chacune par des symboles source représentatifs d'un signal source à transmettre, **caractérisé en ce qu'**il comprend :

- un filtre adaptatif (33) alimenté par ledit signal reçu et délivrant un signal égalisé, échantillonné à une cadence supérieure à celle desdits symboles,
- des moyens (34) de transformation inverse d'une transformation (11) mise en oeuvre à l'émission, alimentés par ledit signal égalisé et délivrant, lorsque ledit filtre adaptatif (33) a convergé, d'une part un premier jeu (39) de valeurs représentatives des symboles émis, et d'autre part un second jeu (36) de valeurs non significatives par rapport audit signal source, et
- des moyens (37) de contrôle dudit filtre adaptatif, agissant en fonction desdites valeurs formant ledit second jeu de valeurs .

**10.** Procédé d'égalisation d'un signal multiporteuse reçu au travers d'un canal de transmission variable, ledit signal étant formé d'une pluralité de fréquences porteuses orthogonales modulées chacune par des symboles source représentatifs d'un signal source à transmettre, **caractérisé en ce qu'**il comprend les étapes suivantes :

- filtrage adaptatif (510) dudit signal reçu, délivrant un signal égalisé échantillonné à une cadence supérieure à celle desdits symboles,
- transformation (51), inverse d'une transformation effectuée à l'émission, dudit signal égalisé, délivrant, lorsque ledit filtre adaptatif a convergé, d'une part un premier jeu de valeurs représentatives des symboles émis, et d'autre part un second jeu de valeurs non significatives par rapport audit signal source, et
- contrôle (59) des paramètres dudit filtre adaptatif, agissant en fonction desdites valeurs formant ledit second jeu de valeurs.


**Patentansprüche**

**1.** Vorrichtung zur Entzerrung eines über einen variablen Übertragungskanal empfangenen Mehrfach-Frequenzträgersignals, wobei dieses Signal von einer Vielzahl von orthogonalen Trägerfrequenzen gebildet wird, die jeweils durch für ein zu sendendes Quellensignal repräsentative Quellensymbole moduliert werden, **dadurch gekennzeichnet, dass** sie folgendes umfasst:

- ein von dem empfangenen Signal gespeistes Adaptivfilter (33), das ein entzerrtes Signal liefert, das mit einem höheren Takt als der der erwähnten Symbole abgetastet wird,
- Mittel (34) für eine inverse Transformation einer beim Senden angewandten Transformation (11), die vom erwähnten entzerrten Signal gespeist werden und die, wenn das Adaptivfilter (33) konvergiert hat, einerseits einen ersten Satz (39) von für die gesendeten Symbole repräsentativen Werten und andererseits einen zweiten Satz (36) von Werten liefert, die im Verhältnis zum Quellensignal unbedeutend sind und,
- Steuerungsmittel (37) des erwähnten Adaptivfilters, die als Funktion der den zweiten Wertesatz bildenden Werte wirken.

**2.** Vorrichtung zur Entzerrung nach Anspruch 1, **dadurch gekennzeichnet, dass** die Steuerungsmittel (37) Werte aus dem ersten Wertesatz berücksichtigen, welche Referenzsymbolen (38) entsprechen, deren Wert beim Senden dem Empfänger im Voraus bekannt ist.

**3.** Vorrichtung zur Entzerrung nach einem der Ansprüche 1 oder 2, **dadurch gekennzeichnet, dass** die Mittel (34) für eine inverse Transformation eine Zahl von Eingaben $N_r$ aufweisen, die der Eingabezahl der Mittel (11) für eine beim Senden angewandte Transformation identisch ist, wobei diese systematisch mit einem Satz von $N_r$-$N_u$ Nullwerten gespeist werden.

4. Vorrichtung zur Entzerrung nach einem der Ansprüche 1 oder 2, **dadurch gekennzeichnet, dass** die Mittel (34) für eine inverse Transformation eine Zahl von Eingaben $N_r$ aufweisen, die größer ist als die Eingabezahl der Mittel (11) für eine beim Senden angewandte Transformation.

5. Vorrichtung zur Entzerrung nach einem der Ansprüche 1 bis 4, **dadurch gekennzeichnet, dass** die Transformationsmittel (34) der Gruppe angehören, die folgendes umfasst:

   - die diskrete orthogonale, reelle oder komplexe Transformationen, wie die diskreten Fourier-Transformationen;
   - die reellen oder komplexen Filterbänke.

6. Vorrichtung zur Entzerrung nach einem der Ansprüche 1 bis 5, **dadurch gekennzeichnet, dass** die Steuerungsmittel (37) angepasst sind, um ein quadratisches Kriterium zu minimieren, welches eine Funktion des zweiten Wertesatzes ist.

7. Vorrichtung zur Entzerrung nach einem der Ansprüche 1 bis 6, **dadurch gekennzeichnet, dass** die Steuerungsmittel (37) Mittel umfassen, mit denen beim Feststellen ungünstiger Empfangsbedingungen, die Aktualisierung der Parameter des Adaptivfilters kurzzeitig unterbrochen werden kann oder mit denen die Konvergenzgeschwindigkeit verlangsamt werden kann.

8. Vorrichtung zur Entzerrung nach einem der Ansprüche 1 bis 6, **dadurch gekennzeichnet, dass** es eine Synchronisierungsinformation oder eine Synchronisierungshilfsinformation liefert.

9. Empfänger eines über einen variablen Sendekanal empfangenen Mehrfach-Frequenzträgersignals, wobei dieses Signal von einer Vielzahl von orthogonalen Trägerfrequenzen gebildet wird, die jeweils durch für ein zu sendendes Quellensignal repräsentative Quellensymbole moduliert werden,
**dadurch gekennzeichnet, dass** sie folgendes umfasst:

   - ein von dem empfangenen Signal gespeistes Adaptivfilter (33), das ein entzerrtes Signal liefert, das mit einem höheren Takt als der der erwähnten Symbole abgetastet wird,
   - Mittel (34) für eine inverse Transformation einer beim Senden angewandten Transformation (11), die vom erwähnten entzerrten Signal gespeist werden und die, wenn das Adaptivfilter (33) konvergiert hat, einerseits einen ersten Satz (39) von für die gesendeten Symbole repräsentativen Werten und andererseits einen zweiten Satz (36) von Werten liefert, die im Verhältnis zum Quellensignal unbedeutend sind und,
   - Steuerungsmittel (37) des erwähnten Adaptivfilters, die als Funktion der den zweiten Wertesatz bildenden Werte wirken.

10. Verfahren zur Entzerrung eines über einen variablen Übertragungskanal empfangenen Mehrfach-Frequenzträgersignals, wobei dieses Signal von einer Vielzahl von orthogonalen Trägerfrequenzen gebildet wird, die jeweils durch für ein zu sendendes Quellensignal repräsentative Quellensymbole moduliert werden,
**dadurch gekennzeichnet, dass** es die folgenden Schritte umfasst:

   - adaptives Filtern (510) des empfangenen Signals, das ein entzerrtes Signal liefert, das mit einem höheren Takt als der der erwähnten Symbole abgetastet wird,
   - Transformation (51), die invers ist zu einer beim Senden angewandten Transformation, des entzerrten Signals, die, wenn das Adaptivfilter konvergiert hat, einerseits einen ersten Satz von für die gesendeten Symbole repräsentativen Werten und andererseits einen zweiten Satz von Werten liefert, die im Verhältnis zum Quellensignal unbedeutend sind und,
   - Steuerung (59) der Parameter des erwähnten Adaptivfilters, die als Funktion der den zweiten Wertesatz bildenden Werte wirken.

## Claims

1. Device for equalising a multicarrier signal received via a variable transmission channel, the said signal being formed by a plurality of orthogonal carrier frequencies each modulated by representative source symbols of a source signal to be transmitted, **characterised in that** the device comprises:

- an adaptive filter (33) fed by the said received signal and delivering an equalised signal sampled at a rate greater than that of the said symbols,

- means (34) for inverse transformation of a transformation (11) employed in the emission, fed by the said equalised signal and delivering, when the said adaptive filter (33) has converged, on the one hand a first set (39) of representative values of the emitted symbols, and on the other hand a second set (36) of values that are not significant with respect to the said source signal, and

- means (37) for controlling the said adaptive filter, acting as a function of the said values forming the said second set of values.

2. Equalising device according to claim 1, **characterised in that** the said control means (37) take account of values belonging to the said first set of values and corresponding to reference symbols (38) whose value on emission is known *a priori* from the receiver.

3. Equalising device according to any one of claims 1 and 2, **characterised in that** the said inverse transformation means (34) have a number of inputs $N_r$ identical to the number of inputs of the said transformation means (11) employed in the emission, the latter being systematically fed by a set of $N_r-N_u$ zero values.

4. Equalising device according to any one of claims 1 and 2, **characterised in that** the said inverse transformation means (34) have a number of inputs $N_r$ greater than the number of inputs of the said transformation means (11) employed in the emission.

5. Equalising device according to any one of claims 1 to 4, **characterised in that** the said transformation means (34) belong to a group comprising:

- real or complex discrete orthogonal transformations such as the discrete Fourier transformations;

- banks of real or complex filters.

6. Equalising device according to any one of claims 1 to 5, **characterised in that** the said control means (37) are capable of minimising a quadratic criterion that is a function of the said second set of values.

7. Equalising device according to any one of claims 1 to 6, **characterised in that** the said control means (37) comprise means for momentarily interrupting the updating of the parameters of the said adaptive filter, or for forcing the parameters to adopt predetermined values, or for slowing down their rate of convergence, when unfavourable reception conditions are detected.

8. Equalising device according to any one of claims 1 to 6, **characterised in that** it delivers synchronisation information or information for aiding synchronisation.

9. Receiver for a multicarrier signal received via a variable transmission channel, the said signal being formed by a plurality of orthogonal carrier frequencies each modulated by representative source symbols of a source signal to be transmitted, **characterised in that** the receiver comprises:

- an adaptive filter (33) fed by the said received signal and delivering an equalised signal sampled at a rate greater than that of the said symbols,

- means (34) for inverse transformation of a transformation (11) employed in the emission, fed by the said equalised signal and delivering, when the said adaptive filter (33) has converged, on the one hand a first set (39) of representative values of the emitted symbols, and on the other hand a second set (36) of values that are not significant with respect to the said source signal, and

- means (37) for controlling the said adaptive filter, acting as a function of the said values forming the said second set of values.

**10.** Process for equalising a multicarrier signal received via a variable transmission channel, the said signal being formed by a plurality of orthogonal carrier frequencies each modulated by representative source symbols of a source signal to be transmitted, **characterised in that** the process comprises the following steps:

- adaptive filtering (510) of the said received signal, delivering an equalised signal sampled at a rate greater than that of the said symbols,

- inverse transformation (51) of a transformation effected on emission, of the said equalised signal so as to deliver, when the said adaptive filter has converged, on the one hand a first set of representative values of the emitted symbols, and on the other hand a second set of values that are not significant with respect to the said source signal, and

- control (59) of the parameters of the said adaptive filter, acting as a function of the said values forming the said second set of values.

Fig. 1

Fig. 3

EP 0 797 333 B1

Fig. 2

Fig. 4

Fig. 5